Europäisches Patentamt

European Patent Office

Office européen des brevets

(19)

(11) Numéro de publication: **0 088 648**
**B1**

(12) **FASCICULE DE BREVET EUROPEEN**

(45) Date de publication du fascicule du brevet: **17.11.88**

(21) Numéro de dépôt: **83400203.2**

(22) Date de dépôt: **28.01.83**

(51) Int. Cl.⁴: **F 16 K 1/44, F 16 K 1/10**

(54) **Vanne à double obturation assurant une étanchéité totale.**

(30) Priorité: **01.02.82 FR 8201534**

(43) Date de publication de la demande:
**14.09.83 Bulletin 83/37**

(45) Mention de la délivrance du brevet: ˙
**17.11.88 Bulletin 88/46**

(84) Etats contractants désignés:
**BE CH DE FR GB IT LI SE**

(56) Documents cités:
**US - A - 1 724 017**
**US - A - 4 166 607**
**US - A - 4 232 695**

(73) Titulaire: **JEUMONT-SCHNEIDER Société anonyme dite:,
31-32, Quai de Dion Bouton, F-92811 Puteaux Cedex
(FR)**

(72) Inventeur: **Timmermans, Francis, 6, rue Ambroise
Thomas, Les Marzelles F-59460 Jeumont (FR)**

(74) Mandataire: **Lejet, Christian, Société
JEUMONT-SCHNEIDER 31-32, Quai de Dion Bouton,
F-92811 Puteaux Cedex (FR)**

ACTORUM AG

## Description

Un des graves inconvénients des vannes est en général leur étanchéité imparfaite en position de fermeture, particulièrement lorsqu'il s'agit d'interrompre des débits importants sous forte pression.

La détérioration de l'élément obturateur et de son siège, provoquant une fuite, est imputable aux causes suivantes: usure par érosion et matage résultant d'un effort trop important exercé par l'organe de manœuvre.

Le brevet US-A-1 724 017 décrit une vanne à double obturation utilisée dans un dispositif de pasteurisation du lait et destinée à être placée entre un conteneur et une conduite.

Elle comprend deux soupapes concentriques dont les extrémités ont une périphérie de forme telle que les soupapes peuvent porter sur des sièges de forme complémentaires.

Cette vanne est conçue pour assurer une étanchéité absolue pendant le remplissage et la vidange du conteneur. A cet effet, une chambre, ménagée entre les deux soupapes, permet de capter les fuites qui sont ensuite évacuées vers l'extérieur.

Lors de la commande de fermeture de la vanne, la soupape intérieure est déplacée en direction de son siège sous l'action d'une tige de commande, la soupape extérieure se déplaçant simultanément sous l'action d'un ressort de compression jusqu'à ce qu'elle soit appliquée sur son siège. Lors de la commande d'ouverture de la vanne, la soupape intérieure est tout d'abord soulevée de son siège jusqu'à ce qu'elle vienne en contact avec la soupape extérieure qu'elle entraîne ensuite en comprimant son ressort. Dans cette vanne seule la soupape extérieure est en contact avec le fluide de haute pression. Dans l'hypothèse d'une utilisation pour interrompre des débits importants, la soupape extérieure peut être usée par érosion, la soupape intérieure n'intervenant pas pour assurer une étanchéité absolue au niveau de la vanne mais pour capter et diriger les fuites éventuelles. Une telle vanne n'est pas utilisable dans un système où toute fuite de fluide doit être évitée, notamment dans les centrales nucléaires.

L'invention est relative à une vanne à double obturation, assurant une étanchéité absolue, et destinée à être fermée dans le sens d'écoulement d'un fluide sous haute pression dans un conduit.

Elle comprend deux soupapes concentriques dont les extrémités ont une périphérie de forme telle que les soupapes peuvent porter sur des sièges de formes complémentaires. Cette vanne a pour objet d'éliminer les fuites entraînées par la détérioration de l'élément obturateur.

Selon l'invention, la soupape extérieure est solidaire d'une tige de commande et la soupape intérieure est portée en translation axiale à l'intérieur de la soupape extérieure au moyen d'un soufflet élastique coaxial de façon que, lors de la commande de fermeture, la soupape intérieure porte sur son siège avant que la soupape extérieure n'atteigne le sien, les soupapes étant pourvues d'épaulements complémentaires, lors de la commande d'ouverture, le mouvement de la soupape extérieure après décollement de son siège détermine le mouvement de la soupape intérieure. La soupape intérieure présente un passage central mettant en communication la région intérieure du soufflet avec la région en aval sous basse pression du conduit quand la soupape intérieure porte sur son siège dans ladite région en aval. La chambre annulaire entre le soufflet et la soupape extérieure est en communication avec la région en amont sous pression élevée du conduit lorsque la soupape extérieure ne porte pas sur son siège dans ladite région en amont de sorte que la soupape intérieure est soumise durant sous mouvement de fermeture à une pression différentielle l'appliquant sur son siège.

On décrira ci-après un mode de réalisation de l'invention en se référant au dessin annexé.

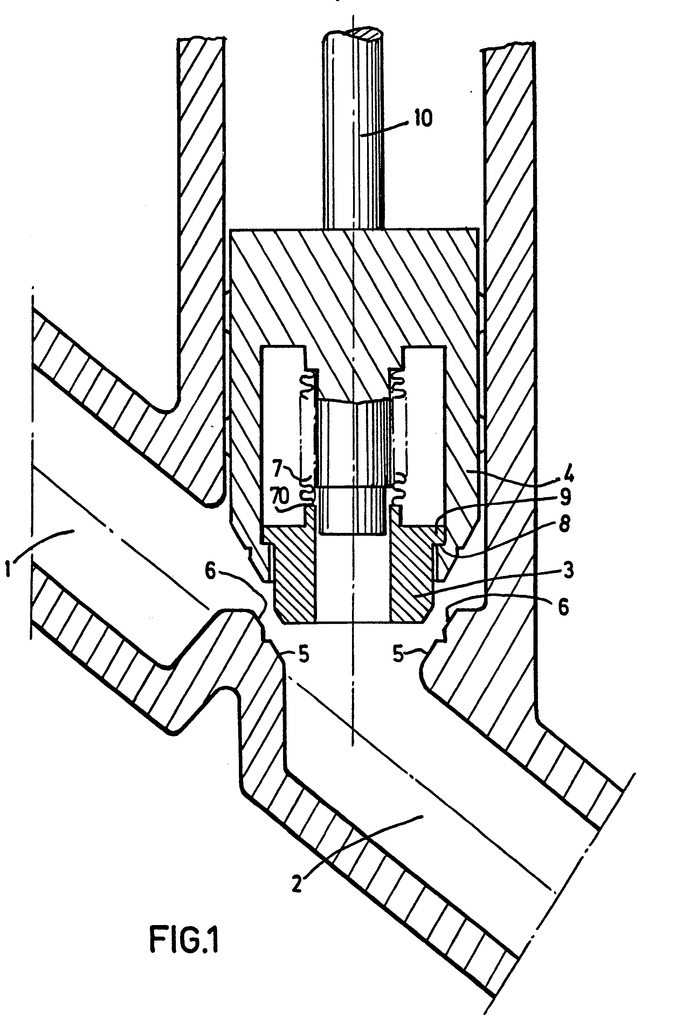

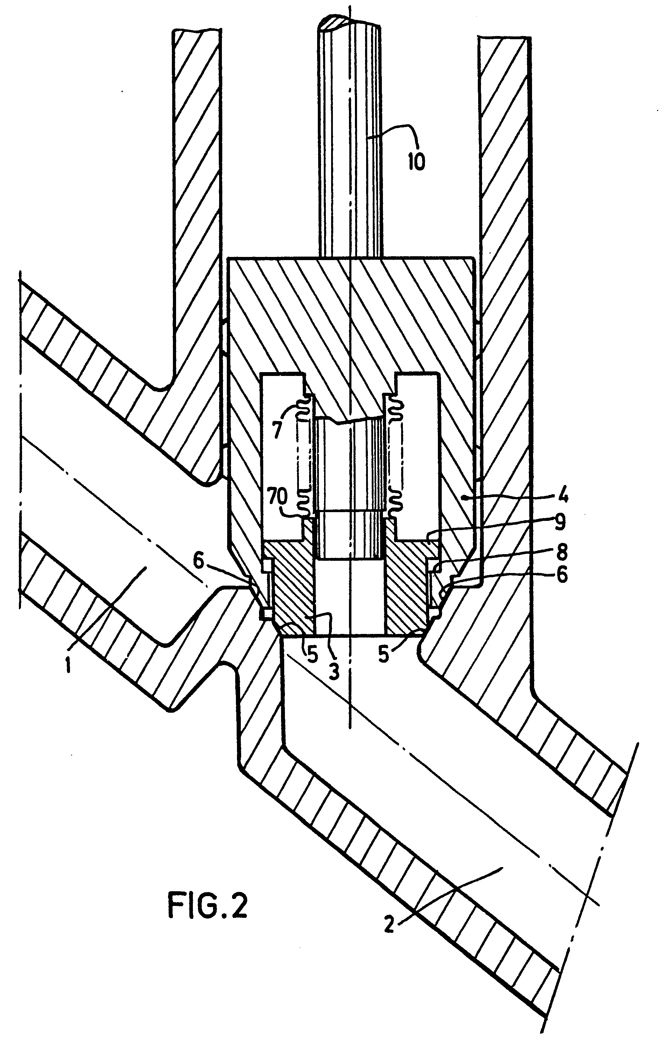

La figure 1 représente les soupapes en position ouverte et la figure 2 les représente en position fermée.

Sur ces figures, les références 1 et 2 désignent le conduit parcouru par le fluide, respectivement en amont et en aval de la vanne. La référence 10 désigne la tige de commande de la soupape intérieure 3 et de la soupape extérieure 4. Le siège de la soupape 3 porte la référence 5 et celui de la soupape 4 la référence 6. La fermeture de la soupape intérieure 3 est commandée par l'intermédiaire du soufflet élastique 7 portant sur l'épaulement 70. La référence 8 désigne un épaulement interne de la soupape extérieure 4 et la référence 9 un épaulement externe de la soupape intérieure 3.

On décrira maintenant le fonctionnement du dispositif. Les soupapes sont tout d'abord considérées en position ouverte tel que représenté sur la figure 1: le fluide passe librement de 1 à 2.

Lorsque la commande de fermeture 10 entre en action, les deux soupapes sont poussées vers le bas. En raison de la répartition des emplacements des sièges, la soupape intérieure 3 porte la première sur son siège 5, ce qui interrompt le passage du fluide, étant soumise durant son mouvement descendant à une pression différentielle importante l'appliquant sur son siège. L'action de la commande de fermeture se poursuivant, le soufflet élastique 7 est comprimé, la soupape 4 porte à son tour sur son siège 6: cette position des soupapes est représentée figure 2.

Ainsi, la soupape intérieure 3 ayant interrompu le débit, la soupape extérieure 4 n'est pas soumise au flux de fluide et se ferme sous faible pression différentielle et faible débit. Elle peut assurer la continuité de l'étanchéité dans le temps étant soustraite à la fois à l'effet d'érosion et au matage pouvant résulter d'un effort moteur important nécessaire pour vaincre la pression du fluide. Seule la soupape intérieure peut être atteinte par l'érosion éventuelle, ce qui n'affecte pas le bon fonctionnement de la vanne puisque cette soupape n'a pas pour fonction d'assurer la parfaite étanchéité en position fermée, ce qui incombe à la soupape extérieure 4 ainsi qu'il a été indiqué précédemment.

L'ouverture de la vanne résulte de l'action suivante: la tige de commande 10 est tirée vers le haut, ce qui détermine un mouvement identique de la soupape extérieure 4 qui en est directement solidaire sans intermédiaire élastique. Le mouvement de cette soupape se poursuivant, en raison de la présence des épaulements 8 et 9 la soupape intérieure 3 est entraînée à son tour et les deux soupapes occupent à nouveau la position représentée sur la figure 1.

## Revendication

Vanne à double obturation, assurant une étanchéité absolue, et destinée à être fermée dans le sens d'écoulement d'un fluide sous haute pression dans un conduit, comprenant deux soupapes concentriques dont les extrémités ont une périphérie de forme telle que les soupapes peuvent porter sur des sièges de formes complémentaires, caractérisée en ce que la soupape extérieure (4) est solidaire d'une tige de commande (10) et la soupape intérieure (31) est portée en translation axiale à l'intérieur de ladite soupape extérieure (4) au moyen d'un soufflet élastique coaxial (7) de façon que, lors de la commande de fermeture, la soupape intérieure (3) porte sur son siège avant que la soupape extérieure (4) n'atteigne le sien, lesdites soupapes étant pourvues d'épaulements complémentaires (8, 9), lors de la commande d'ouverture, le mouvement de ladite soupape extérieure (4) après décollement de son siège (6) détermine le mouvement de ladite soupape intérieure (31) et en ce que ladite soupape intérieure (3) présente un passage central mettant en communication la région intérieure dudit soufflet (7) avec la région (2) en aval sous basse pression dudit conduit quand ladite soupape intérieure (3) porte sur son siège (5) dans ladite région en aval et la chambre annulaire entre ledit soufflet (7) et la soupape extérieure (4) est en communication avec la région (1) en amont sous pression élevée dudit conduit lorsque ladite soupape extérieure (4) ne porte pas sur son siège (6) dans ladite région (1) en amont, de sorte que la soupape intérieure est soumise durant son mouvement de fermeture à une pression différentielle l'appliquant sur son siège.

## Claim

Double-seal valve ensuring absolute leaktightness and intended to be closed in the direction of flow of a fluid under high pressure in a pipe, comprising two concentric valve heads whose ends have a periphery so shaped that the valve heads can bear against seats having complementary shapes, characterized in that the outer valve head (4) is fastened to a control rod (10) and the inner valve head (3) is caused to make an axial translatory movement inside said outer valve head (4) by means of a coaxial resilient bellows (7) in such a manner that when the closure operation is carried out the inner valve head (3) bears against its seat before the outer valve head (4) reaches its seat, said valve heads being provided with complementary shoulders (8, 9), and that when the opening operation is carried out the movement of said outer valve head (4) after being lifted off its seat (6) brings about the movement of said inner valve head (3), and in that said inner valve head (3) has a central passage bringing the internal region of said bellows (7) into communication with the downstream region (2) under low pressure in said pipe when the inner valve head (3) bears against its seat (5) in said downstream region, and that the annular chamber between said bellows (7) and the outer valve head (4) is in communication with the upstream region (1) under high pressure in said pipe when said outer valve head (4) is not bearing against its seat (6) in said upstream region (1), so that during its closing movement the inner valve head is subjected to a differential pressure applying it against its seat.

## Patentanspruch

Doppelverschluss-Ventil, das eine vollkommene Abdichtung gewährleistet und das dazu bestimmt ist, in der Abfliessrichtung eines in einer Leitung unter Hochdruck sich befindenden fluiden Mediums geschlossen zu werden, mit zwei konzentrischen Schliesskörpern, deren Enden eine solche Umfangsform aufweisen, dass die Schliesskörper auf Ventilsitzen von komplementärer Form anliegen können, dadurch gekennzeichnet, dass der Aussenschliesskörper (4) mit einer Bedienungsstange (10) fest verbunden ist und der Innenschliesskörper (3) in axialer Translationsbewegung innerhalb des genannten Aussenschliesskörpers (4) mittels eines koaxialen elastischen Balges (7) gehalten wird, so dass während der Verschlusssteuerung der Innenschliesskörper (3) auf seinem Ventilsitz anliegt, bevor der Aussenschliesskörper (4) seinen Ventilsitz erreicht hat, wobei die genannten Schliesskörper mit komplementären Schultern (8, 9) versehen sind, wobei während der Öffnungssteuerung die Bewegung des genannten Aussenschliesskörpers (4) nach dem Abheben von seinem Ventilsitz (6) die Bewegung des genannten Innenschliesskörpers (3) bestimmt, und dass der genannte Innenschliesskörper (3) einen zentralen Durchgang aufweist, der den inneren Bereich des genannten Balges (7) mit dem Bereich (2) der genannten Leitung, der unter Niederdruck steht und abströmseitig liegt, in Verbindung setzt, wenn der genannte Innenschliesskörper an seinem Ventilsitz (5) in dem genannten abströmseitigen Bereich anliegt, und die ringförmige Kammer zwischen dem genannten Balgen (7) und dem Aussenschliesskörper (4) mit dem Bereich (1) der genannten Leitung, der unter Hochdruck steht und zuströmseitig liegt, in Verbindung steht, wenn der genannte Aussenschliesskörper (4) in dem genannten zuströmseitigen Bereich (1) nicht an seinem Ventilsitz (6) anliegt, so dass auf den Innenschliesskörper während seiner Verschlussbewegung ein ihn auf seinen Ventilsitz andrückender Druckunterschied einwirkt.

FIG.1

FIG.2